# EUROPEAN PATENT APPLICATION

(11) **EP 4 682 027 A1**
(43) Date of publication of application: **21.01.2026**
(21) Application number: 23926630.7
(22) Date of filing: 15.03.2023
(51) Int. Cl.: B62D 21/15, B62D 21/02, B62D 24/00

(54) **VEHICULAR FRAME**

(71) Applicant: Nissan Motor Company, Limited, Kanagawa-ku Yokohama-shi Kanagawa 221-0023 (JP)
(72) Inventor: NINOMIYA, Masafumi, Atsugi-shi, Kanagawa 243-0123 (JP); KOMETANI, Hitoshi, Atsugi-shi, Kanagawa 243-0123 (JP); TERAGUCHI, Tomofumi, Atsugi-shi, Kanagawa 243-0123 (JP); NAKAYAMA, Kazutoshi, Atsugi-shi, Kanagawa 243-0123 (JP)
(74) Representative: Global IP Europe Patentanwaltskanzlei
(86) International application number: PCT/JP2023/010077
(87) International publication number: WO 2024/189822

(57) **Abstract**

Provided is a vehicular frame comprising: a side frame (10) that extends in a front-rear direction of a vehicle on a front side of the vehicle; a cab mount bracket (40) that is attached to the side frame (10) so as to protrude outward in a width direction of the vehicle; and a gusset (50) that is fixed to a vehicle's rear side of the cab mount bracket (40) and is provided facing the side frame (10), wherein the gusset (50) is configured so as not to be joined to the side frame (10).

## Description

### Technical Field

The present invention relates to a vehicular frame.

### Background Art

A vehicle framework structure is known, comprising: a pair of side rails extending along the front-rear direction of the vehicle, with the widthwise spacing on the front side of the vehicle narrower than that on the rear side, and with a bent portion between the front side and rear side of the vehicle; a cab mount bracket provided at the bent portion and protruding outward in the widthwise direction of the vehicle; a load transfer member provided in each of the side rails and including a front wall disposed on the front side of the vehicle along its widthwise direction, with the front wall overlapping with a portion of the cab mount bracket on its rear side when the vehicle is viewed from the side; and a cross member bridging the pair of side rails, disposed on the rear side of the cab mount bracket, and overlapping with the load transfer member when the vehicle is viewed from the side (Patent Document 1).

### Prior Art Documents

### Patent Documents

Patent Document 1: JP6003927B

### Summary of Invention

### Problems to be solved by Invention

The portion of the side rail provided with the cab mount bracket is more rigid and less prone to deformation than other portions of the side rail. According to the above prior art, therefore, in a full-wrap collision in which a collision load is input to the front end of the side rail (also called a side frame), a part of the side rail does not deform in the front-rear direction of the vehicle, and the collision energy cannot be efficiently absorbed.

A problem to be solved by the present invention is to provide a vehicular frame that can efficiently absorb the collision energy input to a vehicle.

### Means for solving problems

In a vehicular frame comprising: a side frame; a cab mount bracket that is attached to the side frame so as to protrude outward in a width direction of the vehicle; and a gusset that is fixed to a vehicle's rear side of the cab mount bracket and is provided facing the side frame, the present invention solves the above problem by configuring the gusset so as not to be joined to the side frame.

### Effect of Invention

According to the present invention, it is possible to efficiently absorb the collision energy input to a vehicle.

### Brief Description of Drawings

FIG. 1 is a plan view illustrating an example of a vehicular frame according to an embodiment of the present invention.
FIG. 2 is a side view of the vehicular frame illustrated in FIG. 1.
FIG. 3 is a perspective view of a main portion of the vehicular frame illustrated in FIG. 1.
FIG. 4 is an exploded perspective view of a gusset illustrated in FIG. 3.
FIG. 5 is an exploded perspective view of a cab mount bracket illustrated in FIG. 3.
FIG. 6 is an exploded perspective view of a bulkhead illustrated in FIG. 1.
FIG. 7 is a plan view illustrating an action of the vehicular frame illustrated in FIG. 1 in absorbing the collision energy in a full wrap collision.
FIG. 8 is a plan view (part 1) illustrating an action of the vehicular frame illustrated in FIG. 1 in absorbing the collision energy in a small overlap collision.
FIG. 9 is a plan view (part 2) illustrating the action of the vehicular frame illustrated in FIG. 1 in absorbing the collision energy in the small overlap collision.

### Mode(s) for Carrying out the Invention

Hereinafter, one or more embodiments of the present invention will be described with reference to the drawings.

### <Configuration of Vehicular Frame>

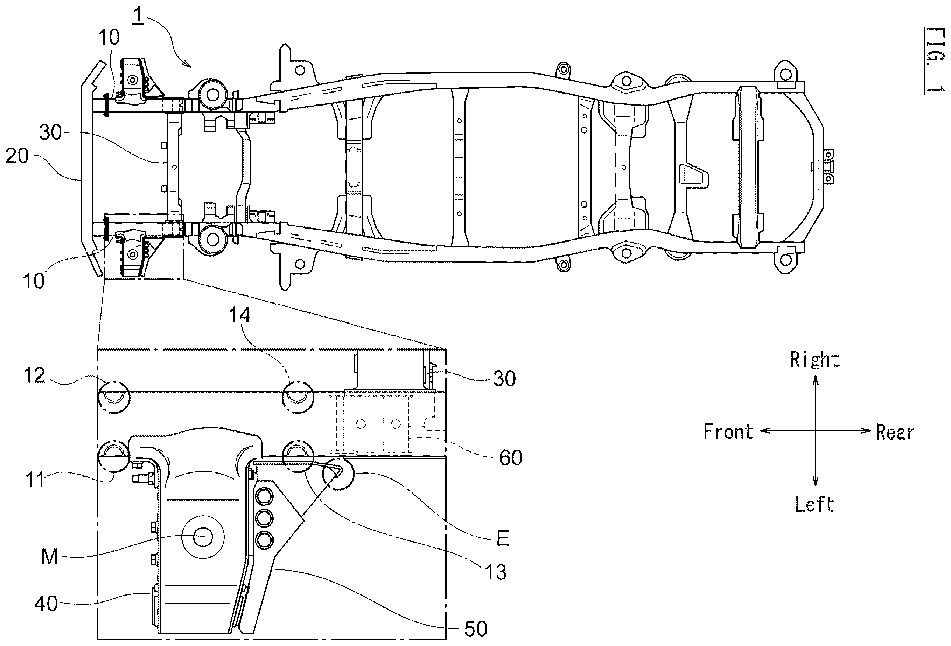

FIG. 1 is a plan view illustrating an example of a vehicular frame according to an embodiment of the present invention. Frame 1 illustrated in FIG. 1 is a frame-like structure that is located at a lower portion of a vehicle body and mainly supports the vehicle body. The vehicle according to the present embodiment is a vehicle equipped with a ladder frame like the frame 1 illustrated in FIG. 1, and is, for example, a truck including a pickup truck, a sports utility vehicle (SUV), etc. The vehicle body is a general term for a body shell, a cab, functional parts of the vehicle body, a luggage carrier, etc.

The body shell refers to a box-shaped structure that constitutes the passenger compartment, the luggage compartment, the engine compartment, etc., and includes the doors, the hood, the trunk lid, etc. The cab refers to a structure that constitutes the passenger compartment, the engine compartment, etc., and is a structure in a completed state as an apparatus with the fittings attached. The functional parts of the vehicle body refer to the mechanism components for opening and closing the doors and windows, etc., and include window glass, weather strips, etc. The luggage carrier refers to a structure that accommodates cargo.

The frame 1 illustrated in FIG. 1 includes a structure on the front side of the vehicle for absorbing collision energy that is input to the vehicle. Specifically, the frame 1 includes a side frame 10, a first cross member 20, a second cross member 30, a cab mount bracket 40, a gusset 50, and a bulkhead 60. These parts are manufactured from steel sheets such as high-strength steel sheets.

The side frame 10 is a part that supports the body shell in addition to the engine and its accessories, which are heavy objects, and extends in the front-rear direction of the vehicle on the front side of the vehicle (specifically, in a position in front of the passenger compartment). The side frame 10 is disposed on each of the right and left sides of the vehicle. That is, as illustrated in FIG. 1, a pair of side frames 10 and 10 are arranged on one vehicle. The side frame 10 is also called a side member.

The cross section of the side frame 10 perpendicular to the front-rear direction of the vehicle has a bag structure. In other words, when the side frame 10 is cut in a cross section parallel to the width direction (left-right direction) of the vehicle, the cross section of the side frame 10 is a closed cross section. The side frame 10 is manufactured, for example, by joining two parts, which are press-formed so that the cross section becomes a U-shape, by spot welding or the like. The shape of the side frame 10 is not particularly limited, provided that it is within a range in which the vehicle body can be appropriately supported.

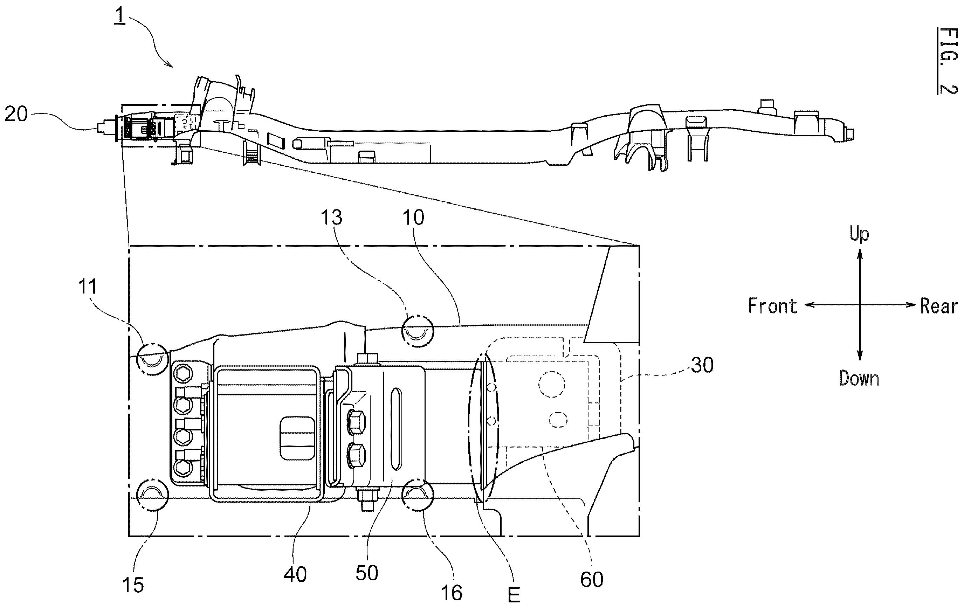

As illustrated in the enlarged view at the lower left of FIG. 1, the side frame 10 has vulnerable sites 11 to 14 that induce crushing in the front-rear direction of the vehicle when a collision load is input in a full-wrap collision. Examples of the vulnerable sites include beads and notches. The positions at which the vulnerable sites are provided are not particularly limited, but for example, as illustrated in FIG. 1, the vulnerable sites are provided on the front and rear sides of the cab mount bracket 40. Alternatively, the vulnerable sites may be provided on the front or rear side of the cab mount bracket 40. Although not illustrated in FIG. 1 which is the plan view, similar vulnerable sites are provided on the lower side of the side frame 10 at positions corresponding to those of the vulnerable sites provided on the upper side of the side frame 10. For example, as illustrated in FIG. 2 which is the side view, a vulnerable site 15 is provided at a position corresponding to the vulnerable site 11 on the upper site, and a vulnerable site 16 is provided at a position corresponding to the vulnerable site 13 on the upper side.

The first cross member 20 and the second cross member 30 are parts that support the engine and its accessories and the body shell, as with the side frame 10, and extend in the width direction of the vehicle to connect the pair of side frames 10 and 10. As illustrated in FIG. 1, the first cross member 20 is attached to the front end portions of the pair of side frames 10 and 10 so as to bridge the two end portions, and the second cross member 30 is attached to the rear end portions of the pair of side frames 10 and 10 so as to bridge the two end portions.

The cross sections of the first cross member 20 and second cross member 30 perpendicular to the width direction of the vehicle have a bag structure. In other words, when the first cross member 20 and the second cross member 30 are cut in a cross section parallel to the front-rear direction of the vehicle, the cross sections of the first cross member 20 and second cross member 30 are closed cross sections. The shape of the first cross member 20 and second cross member 30 is not particularly limited, provided that it is within a range in which the vehicle body can be appropriately supported. In the following description, the second cross member 30 will also be simply referred to as the cross member 30.

The cab mount bracket 40 illustrated in the enlarged view at the lower left of FIG. 1 is a part that supports the vehicle body assembled to its upper side, and has a mount portion M for providing a cab mount (not illustrated). The cab mount bracket 40 is attached to the side frame 10 by welding or the like so as to protrude outward in the width direction of the vehicle. As an example, the cab mount bracket 40 disposed on the left side of the vehicle of FIG. 1 is attached so as to protrude leftward from the side frame 10 disposed on the left side of the vehicle. The shape and attachment position of the cab mount bracket 40 can be appropriately set within a range in which the vehicle body can be appropriately supported.

The gusset 50 illustrated in the enlarged view at the lower left of FIG. 1 is a part that reinforces the cab mount bracket 40, and is attached to the vehicle's rear side of the cab mount bracket 40. For example, the gusset 50 illustrated in FIG. 1 is fixed to the vehicle's rear side of the cab mount bracket 40 with bolts on the rear side of the vehicle. The gusset 50 may also be fixed to the cab mount bracket 40 by welding or the like. Fixing the gusset 50 to the cab mount bracket 40 means that the gusset 50 is fixed at a certain position relative to the cab mount bracket 40 so that it does not move.

The gusset 50 of the present embodiment is fixed to the cab mount bracket 40, but is not joined to the side frame 10. In other words, the gusset 50 is fixed to the rear side of the cab mount bracket 40 and is not joined to the side frame 10. Joining the gusset 50 to the side frame 10 means fixing the gusset 50 at a certain position relative to the side frame 10 so that it does not move, and includes welding the gusset 50 to the side frame 10, attaching the gusset 50 to the side frame 10 with bolts or adhesive, and attaching the gusset 50 to the side frame 10 via a part such as a stay.

As illustrated in the enlarged view at the lower left of FIG. 1, the gusset 50 and the side frame 10 are spaced apart from each other, and the gusset 50 is disposed to face the side frame 10 at a predetermined distance. The predetermined distance between the gusset 50 and the side frame 10 is a distance at which, when a collision load is input to the cab mount bracket 40, the vehicle's rear side end portion of the gusset 50 comes into contact with the side frame 10, and when a collision load is input to the side frame 10, the gusset 50 does not inhibit the deformation of the side frame 10 (specifically, the crushing in the front-rear direction of the vehicle), and is, for example, 5 to 40 mm.

The bulkhead 60 illustrated in the enlarged view at the lower left of FIG. 1 is a part that reinforces the joint between the side frame 10 and the second cross member 30, and is provided inside the side frame 10. The side frame 10 has a bag structure in the cross section perpendicular to the front-rear direction of the vehicle, and thus has a cavity inside, so that a part such as the bulkhead 60 can be provided inside. The bulkhead 60 is disposed at a position near the second cross member 30 inside the side frame 10, as illustrated in the enlarged view at the lower left of FIG. 1, in order to reinforce the joint between the side frame 10 and the second cross member 30. The shape of the bulkhead 60 can be any shape that can appropriately reinforce the above-described joint and can be accommodated inside the side frame 10.

The positional relationship between the second cross member 30, the gusset 50, and the bulkhead 60 will now be described with reference to FIG. 2.

FIG. 2 is a side view of the frame 1 illustrated in FIG. 1. As illustrated in the enlarged view at the lower part of FIG. 2, when the vehicle is viewed from the side, at least a part of the bulkhead 60 overlaps with the second cross member 30 in the front-rear direction of the vehicle. In other words, when the bulkhead 60 and the second cross member 30 are projected onto a projection plane parallel to the front-rear direction of the vehicle, at least a part of the shadow of the bulkhead 60 and the shadow of the second cross member 30 overlap on the projection plane.

In addition, when the vehicle is viewed from the side, at least a part of a rear end portion E of the gusset 50 overlaps with the bulkhead 60 in the front-rear direction of the vehicle. In other words, when the gusset 50 and the bulkhead 60 are projected onto a projection plane parallel to the front-rear direction of the vehicle, at least a part of the shadow of the gusset 50 and the shadow of the bulkhead 60 overlap on the projection plane.

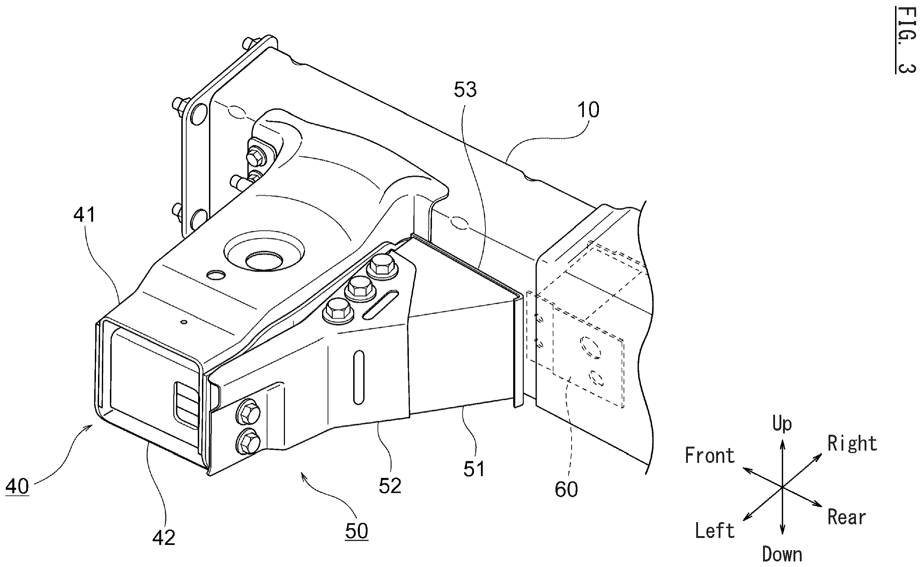

The structure of the cab mount bracket 40 and gusset 50 will then be described with reference to FIGS. 3 to 5.

FIG. 3 is a perspective view of the main portion of the frame 1 illustrated in FIG. 1 when viewed from the upper left rear of the vehicle. As illustrated in FIG. 3, the gusset 50 is composed of a first gusset part 51 that is the main body of the gusset, a second gusset part 52 that reinforces the first gusset part 51, and a third gusset part 53 that closes the opening portion of the first gusset part 51.

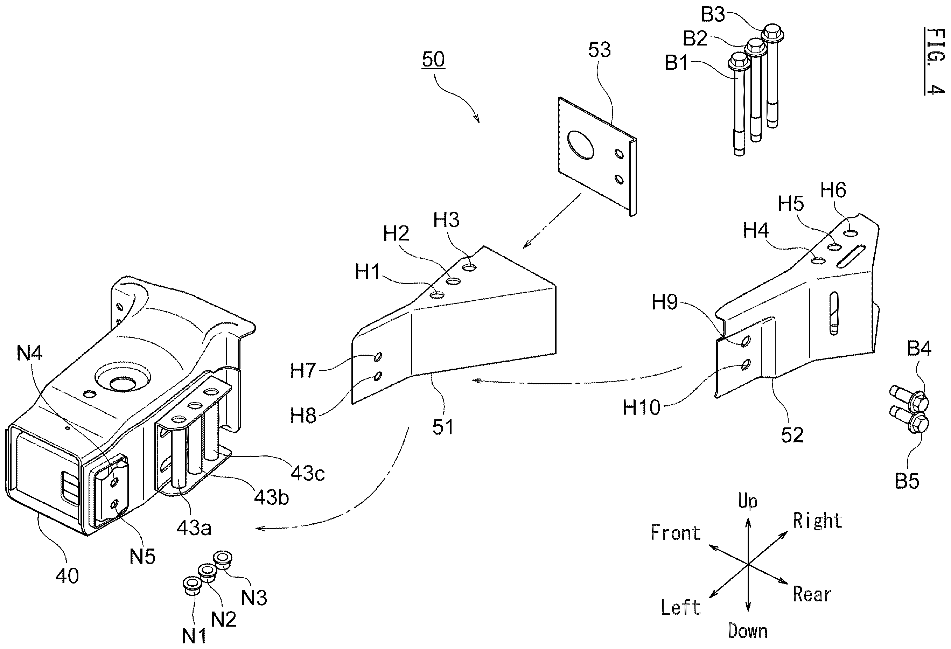

With reference to FIG. 4, the configuration of the gusset 50 will be described in detail. FIG. 4 is an exploded perspective view of the gusset 50 illustrated in FIG. 3. The shape of the first gusset part 51, for example, when viewed from above, is a right-angled triangle in which the side in the front-rear direction of the vehicle and the side in the width direction form a right angle. Also as illustrated in FIG. 4, the first gusset part 51 is provided with a hole H1 through which a bolt B1 passes, a hole H2 through which a bolt B2 passes, a hole H3 through which a bolt B3 passes, a hole H7 through which a bolt B4 passes, and a hole H8 through which a bolt B5 passes. Furthermore, the first gusset part 51 is provided with holes (not illustrated) at positions corresponding to the holes H1, H2, and H3 on the opposite side (i.e., the underside of the vehicle) to the holes H1, H2, and H3.

The second gusset part 52 has a shape that reinforces the attaching portion at which the first gusset part 51 is attached to the cab mount bracket 40, and like the first gusset part 51, is provided with a hole H4 through which the bolt B1 passes, a hole H5 through which the bolt B2 passes, a hole H6 through which the bolt B3 passes, a hole H9 through which the bolt B4 passes, and a hole H10 through which the bolt B5 passes. In addition, holes (not illustrated) are provided at positions corresponding to the holes H4, H5, and H6 on the opposite side (i.e., the underside of the vehicle) to the holes H4, H5, and H6.

The first gusset part 51, the second gusset part 52, and the third gusset part 53 are manufactured, for example, by press-molding steel sheets. When assembling the gusset 50, for example, the third gusset part 53 is welded to the side frame 10 side of the first gusset part 51, and the second gusset part 52 is placed over the first gusset part 51 to which the third gusset part 53 is welded, and then fixed to the cab mount bracket 40 by the bolts B1 to B5. The bolts B1, B2, and B3 are passed through third bracket parts 43a, 43b, and 43c of the cab mount bracket 40, respectively, and are fixed by nuts N1, N2, and N3. The bolts B4 and B5 are fixed by nuts N4 and N5 provided on the cab mount bracket 40, respectively.

The shape of the gusset 50 is not particularly limited, provided that it has a predetermined distance from the side frame 10 and at least a part of the rear end portion E illustrated in FIG. 2 overlaps with the bulkhead 60 in the front-rear direction of the vehicle when viewed from the side.

Referring again to FIG. 3, the cab mount bracket 40 is configured by joining a first bracket part 41 and a second bracket part 42 by welding or the like. Both the first bracket part 41 and the second bracket part 42 are press-formed parts with a U-shaped cross section perpendicular to the width direction of the vehicle, and the cross section of the first bracket part 41 opens downward while the cross section of the second bracket part 42 opens upward.

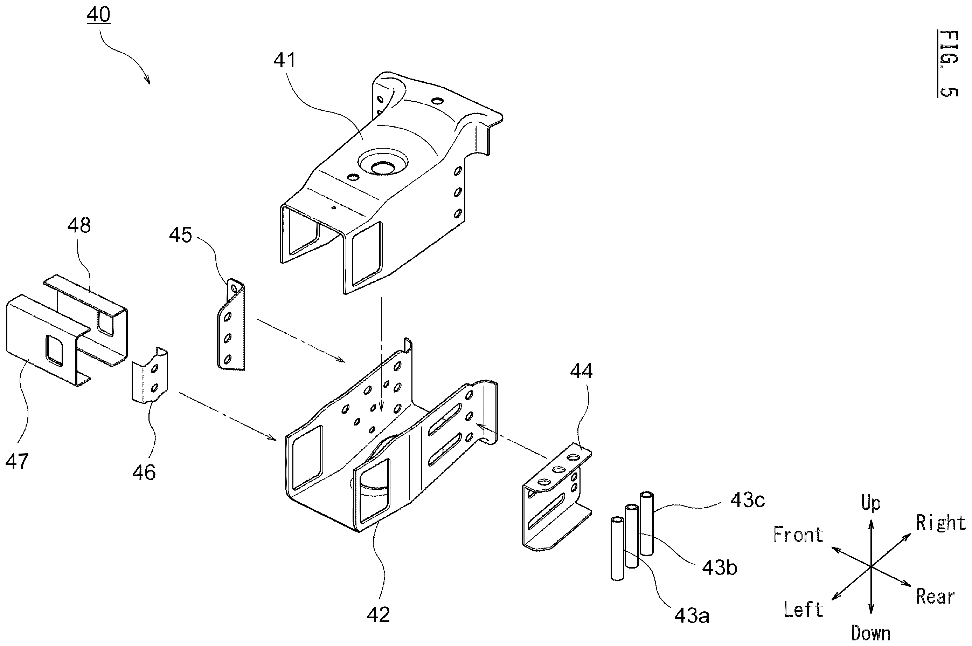

With reference to FIG. 5, the configuration of the cab mount bracket 40 will be described in detail. FIG. 5 is an exploded perspective view of the cab mount bracket 40 illustrated in FIG. 3. The first bracket part 41 and the second bracket part 42 are press-formed parts with a U-shaped cross section as illustrated in FIG. 4, for example, and can be shaped appropriately within a range in which the cab mount bracket 40 can be fixed to the side frame 10 and the gusset 50 can be fixed to the cab mount bracket 40.

The third bracket parts 43a, 43b, and 43c are sleeves for the bolts B1, B2, and B3 to pass through, respectively, and are attached by welding or the like to a fourth bracket part 44, which is a bracket. The fourth bracket part 44 to which the third bracket parts 43a, 43b, and 43c are attached is attached by welding or the like to the second bracket part 42. The shapes of these parts are not particularly limited.

Fifth bracket part 45 is a bracket that fixes the cab mount bracket 40 to the side frame 10, and is welded, for example, to the second bracket part 42. Sixth bracket part 46 is a part that holds nuts N4 and N5, and is housed in a case obtained by combining seventh bracket part 47 and eighth bracket part 48. These parts are also manufactured by press forming or the like of steel sheets, and are joined by welding or the like as necessary. The shapes of these parts are not particularly limited.

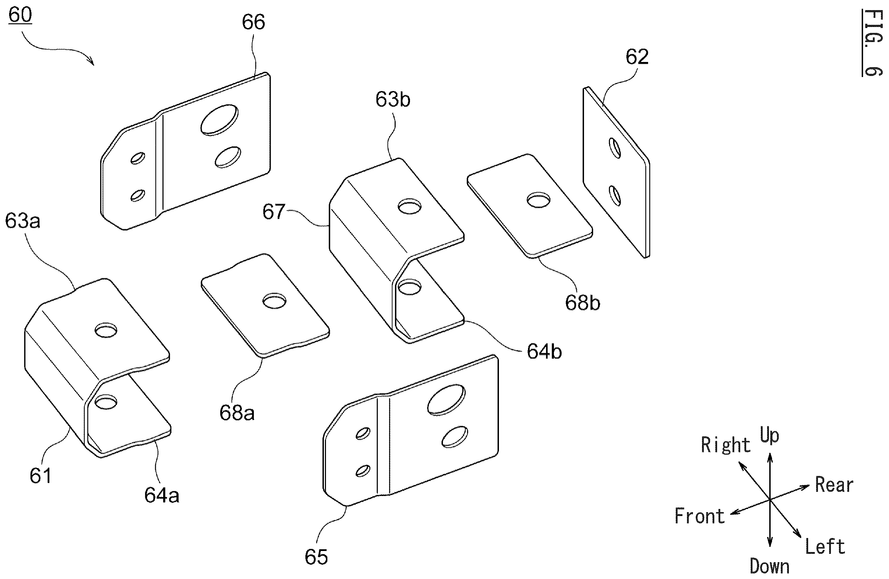

The structure of the bulkhead 60 will then be described with reference to FIG. 6.

FIG. 6 is an exploded perspective view of the bulkhead 60 illustrated in FIG. 1 viewed from the upper left front of the vehicle. As illustrated in FIG. 6, the bulkhead 60 includes a front wall 61, a rear wall 62, a first upper wall 63a, a second upper wall 63b, a first lower wall 64a, a second lower wall 64b, a left wall 65, a right wall 66, a vertical wall 67, a first horizontal wall 68a, and a second horizontal wall 68b. These parts are manufactured, for example, by press forming steel sheets.

The front wall 61 is a member that is disposed on the front side of the vehicle and is perpendicular to the front-rear direction of the vehicle, and the rear wall 62 is a member that is disposed on the rear side of the vehicle and is perpendicular to the front-rear direction of the vehicle. The first upper wall 63a and the second upper wall 63b are members that are disposed on the upper side of the vehicle and are perpendicular to the height direction of the vehicle, and the first lower wall 64a and the second lower wall 64b are members that are disposed on the lower side of the vehicle and are perpendicular to the height direction of the vehicle. In the bulkhead 60 illustrated in FIG. 6, the first upper wall 63a, the first lower wall 64a, and the front wall 61 are made of a single sheet material.

The left wall 65 is a member that is disposed on the outer side in the width direction of the vehicle (on the left side in the case of the bulkhead 60 illustrated in FIG. 1) and is perpendicular to the width direction of the vehicle. The left wall 65 is a member that the end portion E of the gusset 50 comes into contact in a small overlap collision, and serves as a reinforcing wall of the side frame 10. Accordingly, when the vehicle is viewed from the side, the left wall 65, which is a reinforcing wall, overlaps with at least a part of the second cross member 30 and at least a part of the end portion E of the gusset 50 in the front-rear direction of the vehicle. For example, in the bulkhead 60 illustrated in FIG. 2, the left wall 65, which is a reinforcing wall, overlaps with a part of the second cross member 30 and a part of the end portion E of the gusset 50.

The right wall 66 is a member that is disposed on the inside in the width direction of the vehicle (on the right side in the case of the bulkhead 60 illustrated in FIG. 1) and is perpendicular to the width direction of the vehicle. The right wall 66 is a member that, in a small overlap collision, transmits the collision load from the side frame 10 to the second cross member 30, and is fixed inside the side frame 10 near the joint between the side frame 10 and the second cross member 30.

The vertical wall 67 is a member that is disposed between the front wall 61 and the rear wall 62 when the vehicle is viewed from the side, and is perpendicular to the front-rear direction of the vehicle. The first horizontal wall 68a and the second horizontal wall 68b are members that are disposed between the upper wall and the lower wall when the vehicle is viewed from the side, and are perpendicular to the height direction. In the bulkhead 60 illustrated in FIG. 6, the horizontal wall is divided into the first horizontal wall 68a on the front side of the vehicle and the second horizontal wall 68b on the rear side of the vehicle, and the first horizontal wall 68a is disposed between the first upper wall 63a and the first lower wall 64a while the second horizontal wall 68b is disposed between the second upper wall 63b and the second lower wall 64b. Both the vertical wall 67 and the horizontal wall are members that enhance the strength of the bulkhead 60. As in the bulkhead 60 illustrated in FIG. 6, the second upper wall 63b, the second lower wall 64b, and the vertical wall 67 may be a single sheet material.

When manufacturing the bulkhead 60 by combining the members illustrated in FIG. 6, first, the second horizontal wall 68b is welded to the rear wall 62. Then, the second upper wall 63b and the second lower wall 64b are welded to the rear wall 62. Since the vertical wall 67 is integral with the second upper wall 63b and the second lower wall 64b, the second horizontal wall 68b is in a state of being covered by the vertical wall 67. Next, the first horizontal wall 68a is welded to the vertical wall 67. Subsequently, the first upper wall 63a and the first lower wall 64a are welded to the vertical wall 67. Then, the left wall 65 and the right wall 66 are welded to these welded members. Note that the chamfered surface between the front wall 61 and the first upper wall 63a and the chamfered surface between the front wall 61 and the first lower wall 64a are considered to be part of the front wall 61. Likewise, the chamfered surface between the vertical wall 67 and the second upper wall 63b and the chamfered surface between the vertical wall 67 and the second lower wall 64b are considered to be part of the vertical wall 67.

In the bulkhead 60 illustrated in FIG. 6, the upper wall is divided into the first upper wall 63a on the front side of the vehicle and the second upper wall 63b on the rear side of the vehicle, but the first upper wall 63a and the second upper wall 63b on the rear side may be one member and formed into a single upper wall. Likewise, the first lower wall 64a on the front side of the vehicle and the second lower wall 64b on the rear side of the vehicle may be one member and formed into a single lower wall. When the upper wall and the lower wall are not separated as illustrated in FIG. 6, the upper wall, the lower wall, and one of the front wall 61 or the rear wall 62 may be made of a single sheet material. Furthermore, the first horizontal wall 68a on the front side of the vehicle and the second horizontal wall 68b on the rear side of the vehicle may be one member and formed into a single horizontal wall. If the horizontal walls are formed into a single member, the vertical wall 67 will be divided into a portion on the upper side of the vehicle and a portion on the lower side of the vehicle.

The front wall 61, the rear wall 62, and the vertical wall 67 may be perpendicular to the longitudinal direction of the side frame 10 (i.e., perpendicular to the upper and lower surfaces of the inside of the side frame 10). The upper wall (first upper wall 63a and second upper wall 63b), the lower wall (first lower wall 64a and second lower wall 64b), the first horizontal wall 68a, and the second horizontal wall 68b may be perpendicular to the shorter side direction of the side frame 10 (i.e., parallel to the upper and lower surfaces of the inside of the side frame 10). The left wall 65 and the right wall 66 may be parallel to the inner side surface of the side frame 10.

### <Action of Vehicular Frame>

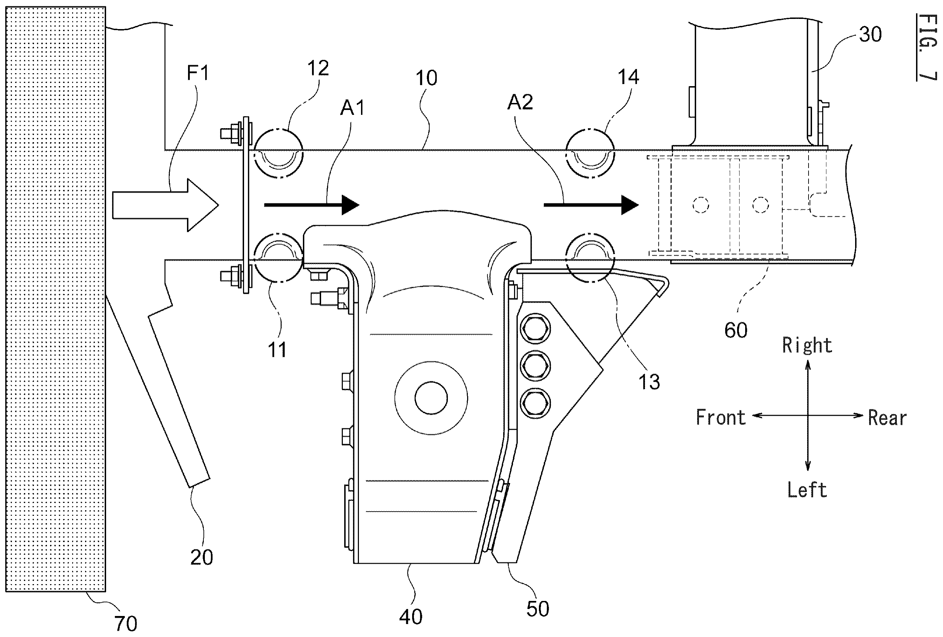

The action of the vehicular frame of the present embodiment will be described with reference to FIGS. 7 to 9.

FIG. 7 is a plan view illustrating the deformation of the frame 1 in a full-wrap collision in which the collision load is input to the front end of the side frame 10. For example, when a vehicle equipped with the frame 1 collides with a barrier 70, a collision load F1 is input to the front end of the side frame 10 via the first cross member 20. The side frame 10 to which the collision load F1 is input is crushed at the portions of the vulnerable sites 11 and 12, and deforms in the direction of an arrow A1 along the front-rear direction of the vehicle. The side frame 10 is also crushed at the portions of the vulnerable sites 13 and 14, and deforms in the direction of an arrow A2 along the front-rear direction of the vehicle. This allows the side frame 10 to be crushed in the front-rear direction of the vehicle in other portions than the portion at which the cab mount bracket 40 is attached, and the collision energy input to the vehicle is absorbed.

In contrast, when the gusset 50 is joined to the facing side frame 10, the gusset 50 inhibits the deformation of the side frame 10, so that the crushing in the front-rear direction of the vehicle does not occur at the portions of the vulnerable sites 13 and 14. Accordingly, the collision energy that can be absorbed by the side frame 10 is reduced compared to that when the gusset 50 is not joined to the side frame 10.

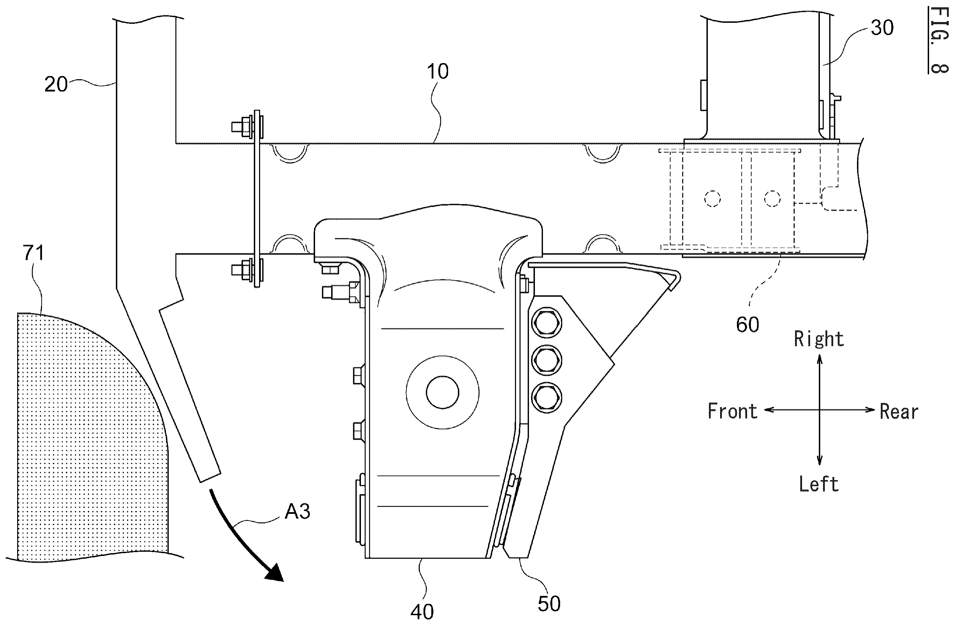

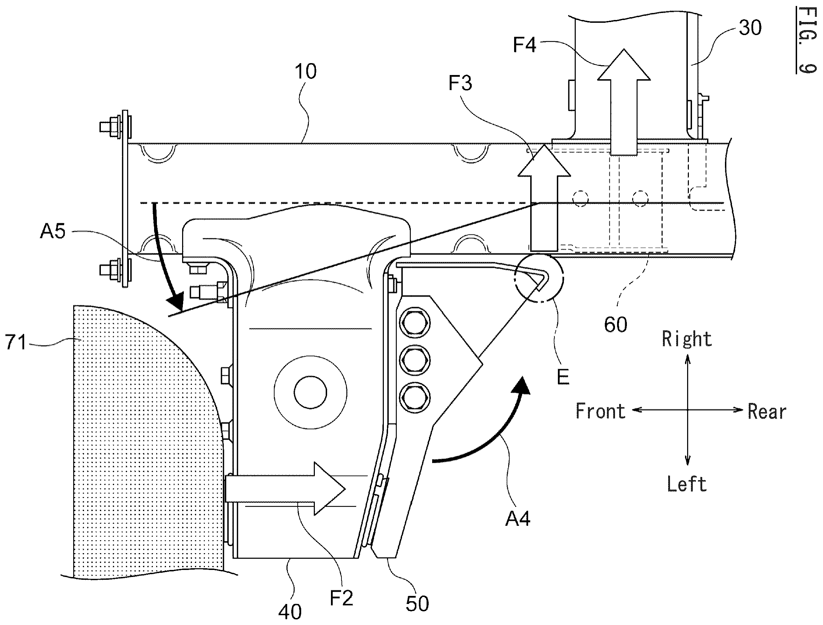

On the other hand, FIG. 8 is a plan view illustrating the deformation of the frame 1 in a small overlap collision in which the collision load is not input to the front end of the side frame 10. For example, when a vehicle equipped with the frame 1 collides with a barrier 71, the first cross member 20 moves in the direction of an arrow A3, and as illustrated in FIG. 9, a collision load F2 is input to the cab mount bracket 40, rather than to the front end of the side frame 10.

The cab mount bracket 40 to which the collision load F2 is input moves together with the gusset 50 in the direction of an arrow A4, and the end portion E on the rear side of the gusset 50 comes into contact with the side frame 10. This contact transmits a collision load F3 from the end portion E on the rear side of the gusset 50 to the side frame 10. This allows the side frame 10 to deform in the direction of an arrow A5 from the portion in contact with the end portion E due to the collision load F3. In addition, the bulkhead 60 provided in the side frame 10 receives the collision load F3 and transmits a collision load F4 to the second cross member 30. Through this operation, even in a small overlap collision, the frame (side frame 10 and second cross member 30) is deformed to absorb the collision energy.

### <Embodiments of Present Invention>

As described above, according to the present embodiment, a vehicular frame is provided, comprising: a side frame that extends in a front-rear direction of a vehicle on a front side of the vehicle; a cab mount bracket 40 that is attached to the side frame so as to protrude outward in a width direction of the vehicle; and a gusset 50 that is fixed to a vehicle's rear side of the cab mount bracket 40 and is provided facing the side frame, wherein the gusset 50 is configured so as not to be joined to the side frame. This allows the collision energy input to the vehicle to be efficiently (appropriately) absorbed.

Moreover, according to the vehicular frame of the present embodiment, it comprises: a bulkhead 60 that is provided in the side frame whose cross section perpendicular to the front-rear direction of the vehicle has a bag structure; and a cross member 30 that extends in the width direction of the vehicle and connects a pair of the side frames, wherein at least a part of the bulkhead 60 overlaps with the cross member 30 in the front-rear direction when the vehicle is viewed from a side, wherein at least a part of an end portion E of the gusset 50 on the rear side overlaps with the bulkhead 60 in the front-rear direction when the vehicle is viewed from the side. This allows the collision load to be appropriately transmitted to the side frame 10 and the cross member 30 in a small overlap collision.

Furthermore, according to the vehicular frame of the present embodiment, the bulkhead 60 comprises: a front wall 61 that is disposed on the front side of the vehicle and is perpendicular to the front-rear direction; a rear wall 62 that is disposed on the rear side and is perpendicular to the front-rear direction; and a vertical wall 67 that is disposed between the front wall 61 and the rear wall 62 when the vehicle is viewed from the side, and is perpendicular to the front-rear direction. This can enhance the strength of the bulkhead 60.

In addition, according to the vehicular frame of the present embodiment, the bulkhead 60 comprises: an upper wall that is disposed on an upper side of the vehicle and is perpendicular to a height direction of the vehicle; and a lower wall that is disposed on a lower side of the vehicle and is perpendicular to the height direction. This can enhance the strength of the bulkhead 60.

Moreover, according to the vehicular frame of the present embodiment, the bulkhead 60 comprises a horizontal wall that is disposed between the upper wall and the lower wall when the vehicle is viewed from the side, and is perpendicular to the height direction. This can enhance the strength of the bulkhead 60.

Furthermore, according to the vehicular frame of the present embodiment, the bulkhead 60 comprises: a front wall 61 that is disposed on the front side of the vehicle and is perpendicular to the front-rear direction; a rear wall 62 that is disposed on the rear side and is perpendicular to the front-rear direction; an upper wall that is disposed on an upper side of the vehicle and is perpendicular to a height direction of the vehicle; and a lower wall that is disposed on a lower side of the vehicle and is perpendicular to the height direction, wherein the upper wall, the lower wall, and one of the front wall 61 or the rear wall 62 are made of a single sheet material. This allows the configuration of the bulkhead 60 to be simplified.

In addition, according to the vehicular frame of the present embodiment, the bulkhead 60 comprises: a vertical wall 67 that is disposed between the front wall 61 and the rear wall 62 when the vehicle is viewed from the side, and is perpendicular to the front-rear direction; and a horizontal wall that is disposed between the upper wall and the lower wall when the vehicle is viewed from the side, and is perpendicular to the height direction, wherein the upper wall comprises a first upper wall 63a on the front side and a second upper wall 63b on the rear side, wherein the lower wall comprises a first lower wall 64a on the front side and a second lower wall 64b on the rear side, wherein the horizontal wall comprises a first horizontal wall 68a on the front side and a second horizontal wall 68b on the rear side, wherein the first upper wall 63a, the first lower wall 64a, and the front wall 61 are made of a single sheet material, wherein the second upper wall 63b, the second lower wall 64b, and the vertical wall 67 are made of a single sheet material. This can enhance the strength of the bulkhead 60.

Moreover, according to the vehicular frame of the present embodiment, the bulkhead 60 comprises a reinforcing wall that is disposed on an outer side in the width direction and is perpendicular to the width direction, and the reinforcing wall overlaps with at least a part of the cross member 30 and at least a part of the end portion of the gusset 50 in the front-rear direction when the vehicle is viewed from the side. This allows the collision load to be appropriately transmitted to the side frame 10 and the cross member 30 in a small overlap collision.

Furthermore, according to the present embodiment, a vehicle comprising the above-described vehicular frame is provided. This allows the collision energy input to the vehicle to be appropriately absorbed.

### Description of Reference Numerals

1... Frame
10...Side frame (side member)
11, 12, 13, 14, 15, 16... Vulnerable site
20... First cross member
30... Second cross member
40... Cab mount bracket
41... First bracket part
42... Second bracket part
43a, 43b, 43c... Third bracket part
44... Fourth bracket part
45... Fifth bracket part
46... Sixth bracket part
47... Seventh bracket part
48... Eighth bracket part
50... Gusset
51... First gusset part
52... Second gusset part
53... Third gusset part
60... Bulkhead
61... Front wall
62... Rear wall
63a... First upper wall
63b... Second upper wall
64a... First lower wall
64b... Second lower wall
65... Left wall (reinforcing wall)
66... Right wall
67... Vertical wall
68a... First horizontal wall
68b... Second horizontal wall
70, 71... Barrier
A1, A2, A3, A4... Arrow
B1, B2, B3, B4, B5... Bolt
E... End portion
F1, F2, F3, F4... Collision load
M... Mount portion
N1, N2, N3, N4, N5... Nut
H1, H2, H3, H4, H5, H6, H7, H8, H9, H10... Hole

## Claims

1. A vehicular frame comprising:
a side frame that extends in a front-rear direction of a vehicle on a front side of the vehicle;
a cab mount bracket that is attached to the side frame so as to protrude outward in a width direction of the vehicle; and
a gusset that is fixed to a vehicle's rear side of the cab mount bracket and is provided facing the side frame,
wherein the gusset is configured so as not to be joined to the side frame.

2. The vehicular frame according to claim 1, comprising:
a bulkhead that is provided in the side frame whose cross section perpendicular to the front-rear direction of the vehicle has a bag structure; and
a cross member that extends in the width direction of the vehicle and connects a pair of the side frames,
wherein at least a part of the bulkhead overlaps with the cross member in the front-rear direction when the vehicle is viewed from a side,
wherein at least a part of an end portion of the gusset on the rear side overlaps with the bulkhead in the front-rear direction when the vehicle is viewed from the side.

3. The vehicular frame according to claim 2, wherein the bulkhead comprises:
a front wall that is disposed on the front side of the vehicle and is perpendicular to the front-rear direction;
a rear wall that is disposed on the rear side and is perpendicular to the front-rear direction; and
a vertical wall that is disposed between the front wall and the rear wall when the vehicle is viewed from the side, and is perpendicular to the front-rear direction.

4. The vehicular frame according to claim 2 or 3, wherein the bulkhead comprises:
an upper wall that is disposed on an upper side of the vehicle and is perpendicular to a height direction of the vehicle; and
a lower wall that is disposed on a lower side of the vehicle and is perpendicular to the height direction.

5. The vehicular frame according to claim 4, wherein the bulkhead comprises a horizontal wall that is disposed between the upper wall and the lower wall when the vehicle is viewed from the side, and is perpendicular to the height direction.

6. The vehicular frame according to claim 2, wherein the bulkhead comprises:
a front wall that is disposed on the front side of the vehicle and is perpendicular to the front-rear direction;
a rear wall that is disposed on the rear side and is perpendicular to the front-rear direction;
an upper wall that is disposed on an upper side of the vehicle and is perpendicular to a height direction of the vehicle; and
a lower wall that is disposed on a lower side of the vehicle and is perpendicular to the height direction,
wherein the upper wall, the lower wall, and one of the front wall or the rear wall are made of a single sheet material.

7. The vehicular frame according to claim 6, wherein the bulkhead comprises:
a vertical wall that is disposed between the front wall and the rear wall when the vehicle is viewed from the side, and is perpendicular to the front-rear direction; and
a horizontal wall that is disposed between the upper wall and the lower wall when the vehicle is viewed from the side, and is perpendicular to the height direction,
wherein the upper wall comprises a first upper wall on the front side and a second upper wall on the rear side,
wherein the lower wall comprises a first lower wall on the front side and a second lower wall on the rear side,
wherein the horizontal wall comprises a first horizontal wall on the front side and a second horizontal wall on the rear side,
wherein the first upper wall, the first lower wall, and the front wall are made of a single sheet material,
wherein the second upper wall, the second lower wall, and the vertical wall are made of a single sheet material.

8. The vehicular frame according to any one of claims 2 to 7, wherein
the bulkhead comprises a reinforcing wall that is disposed on an outer side in the width direction and is perpendicular to the width direction, and
the reinforcing wall overlaps with at least a part of the cross member and at least a part of the end portion of the gusset in the front-rear direction when the vehicle is viewed from the side.

9. A vehicle comprising the vehicular frame according to any one of claims 1 to 8.
